# EUROPEAN PATENT APPLICATION

(11) **EP 3 770 870 A1**
(43) Date of publication of application: **27.01.2021**
(21) Application number: 18910924.2
(22) Date of filing: 20.03.2018
(51) Int. Cl.: G07D 9/00, B65G 11/20, G07D 1/00, G07D 13/00, G07F 19/00

(54) **COIN PROCESSING APPARATUS**

(71) Applicant: Fujitsu Frontech Limited, Inagi-shi, Tokyo 206-8555 (JP)
(72) Inventor: MATSUI, Nobuhiro, Inagi-shi, Tokyo 206-8555 (JP); OHKAWA, Masanori, Inagi-shi, Tokyo 206-8555 (JP); WATANABE, Mitsuo, Inagi-shi, Tokyo 206-8555 (JP); MIYAKE, Toshimasa, Inagi-shi, Tokyo 206-8555 (JP)
(74) Representative: Hoffmann Eitle
(86) International application number: PCT/JP2018/011115
(87) International publication number: WO 2019/180832

(57) **Abstract**

There is provided a coin processing apparatus that prevents discharged coins from falling from a coin cup.

A coin processing apparatus (1) includes a coin cup (2) in front of the apparatus, where an operator operates the apparatus, a coin reception device (3) on the front side in the apparatus, and a coin dispensing device (4) behind the coin reception device (3). The rolling speed of a coin carried to the coin cup (2) is reduced by a coin deceleration part (52), which prevents the coin from falling from the coin cup (2).

## Description

### Technical Field

The embodiment discussed herein is related to a coin processing apparatus that performs coin reception and dispensing processes.

### Background Art

There is a coin processing apparatus including a coin reception device that performs coin reception process for receiving inputted coins and a coin dispensing device that performs coin dispensing process for dispensing previously stored coins. In the case of a coin process apparatus having a coin reception device that does not perform recycling of inputted coins, a coin dispensing device includes coin storage and discharge parts that hold a large number of coins and discharge them. The coins discharged from the coin storage and discharge parts of the coin dispensing device are carried along a transport path formed between the coin dispensing device and a coin cup and discharged to the coin cup on the outside of the apparatus.

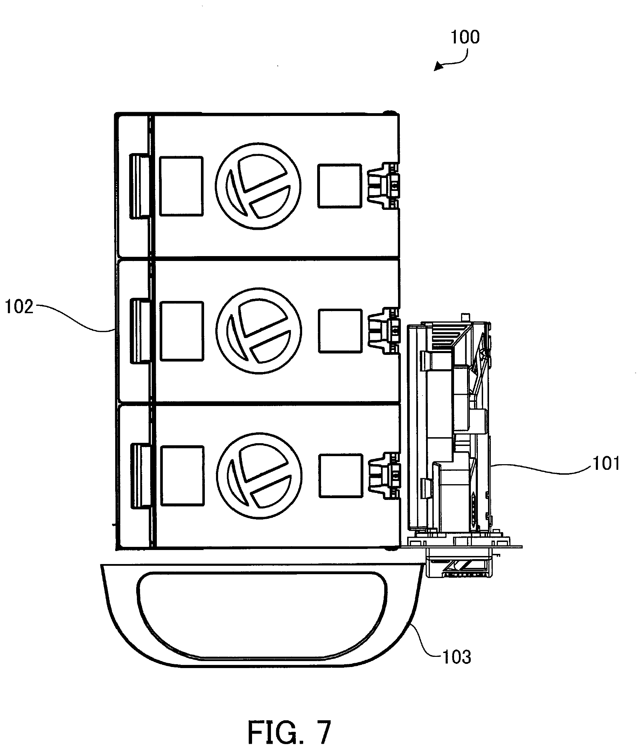

FIG. 7 is a plan view illustrating a configuration example of a conventional coin processing apparatus.

There has been a conventional coin processing apparatus 100 that includes a coin reception device 101 on the right side thereof and a coin dispensing device 102 on the left side thereof. In this case, a coin cup 103 is formed near a coin dispensing port of coin storage and discharge parts of the coin dispensing device 102, and coins discharged from the coin storage and discharge parts are discharged to the coin cup 103 via a short guide member.

Since the coin processing apparatus 100 including the coin reception device 101 on the right side thereof and the coin dispensing device 102 on the left side thereof has a large width, the installation location of the coin processing apparatus 100 is limited. Thus, it is preferable that the coin processing apparatus 100 include the coin reception device 101 and the coin dispensing device 102 on the front and back sides thereof. For example, according to a configuration in PTL1, a coin reception device is placed on the front side of a coin processing apparatus, and a coin dispensing device is placed behind the coin reception device.

In the case of this coin processing apparatus in PTL1 including the coin reception device on the front side thereof and the coin dispensing device on the back side thereof, there is naturally a long distance between the coin dispensing device placed behind the coin reception device and a coin cup placed in front of the apparatus. In this case, coins discharged from coin storage and discharge parts of the coin dispensing device may be carried to the coin cup via a transport belt. In contrast, coins discharged from the coin storage and discharge parts may be carried by rolling down a sloping transport path extending from the coin storage and discharge parts of the coin dispensing device to the coin cup.

### Citation List

### Patent Literature

PTL1: Japanese Laid-open Patent Publication No. 2016-167324

### Summary of Invention

### Technical Problem

However, with the configuration in which coins are carried by rolling down such a long sloping transport path, the speed of the coins increases as the coins roll. As a result, when the coins are discharged from the transport path to the coin cup, some of the coins could fall from the coin cup.

The present invention has been made in view of these points, and it is an object of the present invention to provide a coin processing apparatus that prevents discharged coins from falling from a coin cup even if a transport path from a coin dispensing device to the coin cup is long.

### Solution to Problem

To solve the above problem, the embodiment provides a coin processing apparatus including: a coin cup that is placed at a lower position in front of the coin processing apparatus and that receives a discharged coin; a coin reception device that is adjacent to the coin cup and that is placed in the coin processing apparatus; a coin dispensing device that is placed behind the coin reception device and that discharges a previously stored coin; and a transport path that is placed between the coin dispensing device and the coin cup and that carries a coin discharged from the coin dispensing device to the coin cup. The transport path of the coin processing apparatus includes: a discharged coin catcher part that is placed on a side part of the coin dispensing device in such a way that the discharged coin catcher part slopes down toward a front side of the coin processing apparatus immediately under a coin outlet port from which the coin dispensing device discharges the coin, a coin deceleration part that slows down a rolling speed of the coin delivered from the discharged coin catcher part, and a coin dropping part that delivers the coin that has passed through the coin deceleration part to the coin cup.

### Advantageous Effects of Invention

According to the disclosed technique, there is provided a coin processing apparatus that prevents discharged coins from falling from a coin cup.

The above and other objects, features, and advantages of the invention will be apparent from the following embodiment associated with the accompanying drawings representing suitable embodiments as examples of the embodiment.

### Brief Description of Drawings

FIG. 1 is a plan view illustrating a configuration example of a coin processing apparatus according to an embodiment.
FIG. 2 is a perspective view illustrating the coin processing apparatus without a coin reception device.
FIG. 3 is a side view illustrating the coin processing apparatus without the coin reception device.
FIG. 4 is a plan view illustrating a configuration example of a coin deceleration part on a transport path.
FIG. 5 is a perspective view illustrating the configuration example of the coin deceleration part on the transport path.
FIG. 6 is a vertical sectional view illustrating an installation state of the coin deceleration part on the transport path.
FIG. 7 is a plan view illustrating a configuration example of a conventional coin processing apparatus.

### Description of Embodiments

Hereinafter, an embodiment will be described in detail with reference to the accompanying drawings by using, as an example, a coin processing apparatus including a coin reception device and a coin dispensing device. In the drawings, like reference characters refer to like elements.

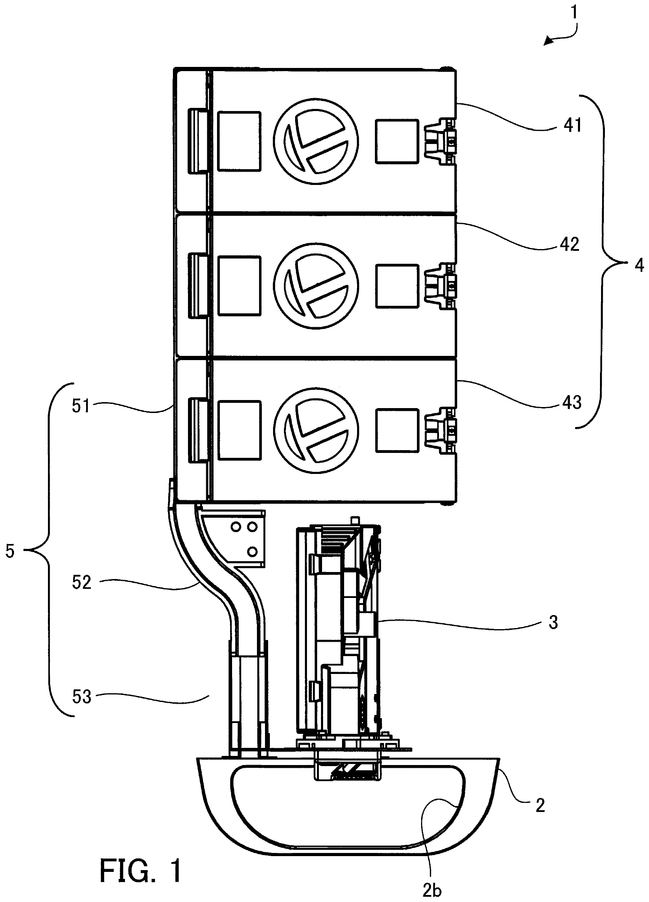

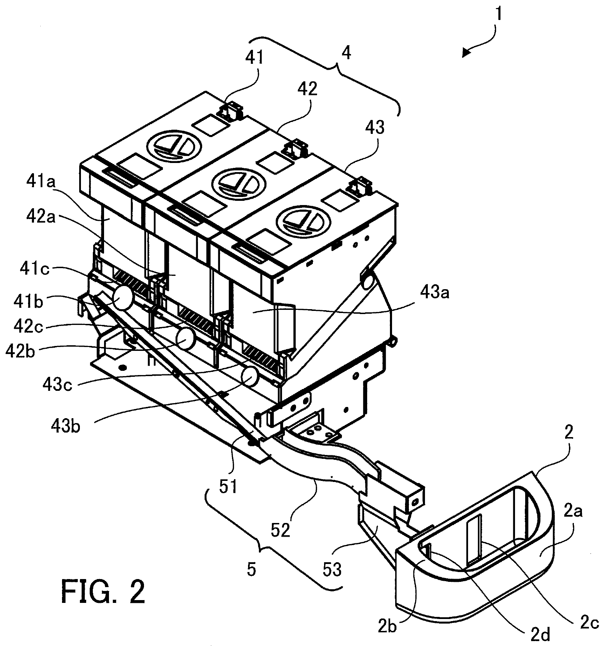

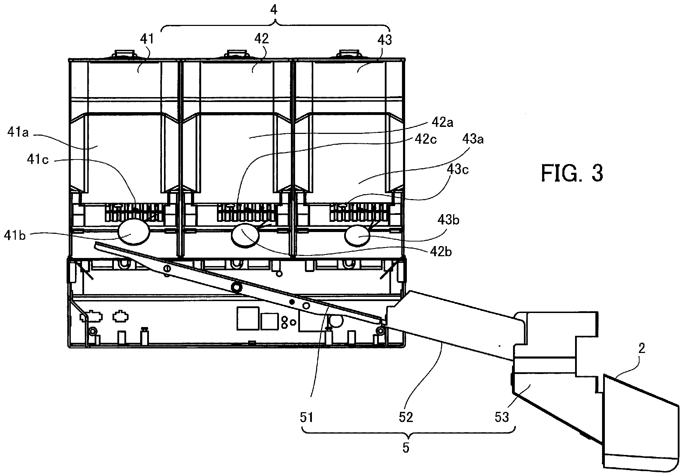

FIG. 1 is a plan view illustrating a configuration example of a coin processing apparatus according to an embodiment. FIG. 2 is a perspective view illustrating the coin processing apparatus without a coin reception device. FIG. 3 is a side view illustrating the coin processing apparatus without the coin reception device.

As illustrated in FIG. 1, this coin processing apparatus 1 has a coin cup 2 in front of the apparatus (on a surface facing the lower side in FIG. 1), where an operator operates the apparatus. Inside the apparatus are a coin reception device 3 on the front side and a coin dispensing device 4 behind the coin reception device 3.

As illustrated in FIG. 2, the circumference of the coin cup 2 is formed by a side wall 2a, and a projected part 2b that partially projects inward is formed around the upper edge of the side wall 2a. The coin cup 2 also includes inside thereof a returned-coin opening part 2c connected to the coin reception device 3 and a discharged-coin opening part 2d for receiving the coins discharged by the coin dispensing device 4. In this way, when coins are entered but fails to be authenticated, i.e., when rejected, these rejected coins are returned from the coin reception device 3 to the coin cup 2 via the returned-coin opening part 2c. In addition, the coins discharged by the coin dispensing device 4 are discharged to the coin cup 2 via the discharged-coin opening part 2d. In this connection, the projected part 2b formed at the upper portion of the coin cup 2 prevents the coins from falling from the coin cup 2.

The coin reception device 3 includes a coin authentication part. When an inserted coin is specie, this coin is stored in a coin storage part in the coin reception device 3. In contrast, when the inserted coin is, for example, deformed and is not determined to be specie, this rejected coin is directly discharged to the coin cup 2.

The coin dispensing device 4 includes a plurality of coin storage and discharge parts. In this embodiment, the coin dispensing device 4 includes three coin storage and discharge parts 41 to 43 that are closely arranged side by side in the front-back direction. Thus, the coin dispensing device 4 is capable of discharging three kinds of coins. The coin storage and discharge parts 41 to 43 include, at the upper portions thereof, hoppers 41a to 43a with a large capacity for holding coins, respectively. The coin storage and discharge parts 41 to 43 also include, at sides thereof, coin outlet ports 41c to 43c from which discharged coins 41b to 43b are discharged, respectively.

For example, it is assumed that the coin storage and discharge part 41 includes a rotating disk having a plurality of holes in which coins 41b are individually and loosely fit in a circumferential direction. This rotating disk is placed with a slope at the bottom of the hopper 41a. In this case, as the rotating disk rotates, the coins 41b in the hopper 41a are individually and loosely fit in the holes, and the loosely fit coin 41b are carried to the coin outlet port 41c. At the coin outlet port 41c, the coins 41b fall off from the holes and are discharged to the outside from the coin outlet port 41c. The other coin storage and discharge parts 42 and 43 for the other kinds of coins have the same configuration as that of the coin storage and discharge part 41.

The coin processing apparatus 1 includes a transport path 5 that guides the coins 41b to 43b discharged from the coin storage and discharge parts 41 to 43 of the coin dispensing device 4 to the coin cup 2, as illustrated in FIGS. 2 and 3. This transport path 5 includes a discharged coin catcher part 51 that receives the discharged coins 41b to 43b, a coin deceleration part 52 that slows down the rolling speed of the coins 41b to 43b, and a coin dropping part 53 that guides the coins 41b to 43b to the coin cup 2.

The discharged coin catcher part 51 is placed on side parts of the coin storage and discharge parts 41 to 43 with a slope down toward the front side of the apparatus immediately under the coin outlet ports 41c to 43c. In this way, the coins 41b to 43b discharged by the coin outlet ports 41c to 43c and then received by the discharged coin catcher part 51 roll toward the front side of the apparatus. The upper surface of this discharged coin catcher part 51 that receives the coins 41b to 43b is formed by a belt-like straight plate. The discharged coin catcher part 51 is entirely covered by a cover not illustrated. Thus, since the discharged coin catcher part 51 is sandwiched by the cover and the side parts of the coin storage and discharge parts 41 to 43, the coins 41b to 43b roll without dropping out of the discharged coin catcher part 51 or falling down.

As best illustrated in FIG. 1, the coin deceleration part 52 has a groove part which rolls the coins 41b to 43b, and this groove part is bent in an S-shape in plan view. This shape forcibly changes the direction in which the coins 41b to 43b received from the discharged coin catcher part 51 roll as they come in contact with the inner walls of the groove part. Thus, after passing through the discharged coin catcher part 51, the coins 41b to 43b greatly loses their rolling speed.

The coin dropping part 53 connects the coin deceleration part 52 and the discharged-coin opening part 2d of the coin cup 2, which is arranged below the coin deceleration part 52. The coins 41b to 43b delivered from the coin deceleration part 52 drop into the coin dropping part 53 and are carried to the coin cup 2. Since the rolling speed of the coins 41b to 43b carried to the coin cup 2 has been reduced by the coin deceleration part 52, the coins 41b to 43b are controlled not to fall from the coin cup 2.

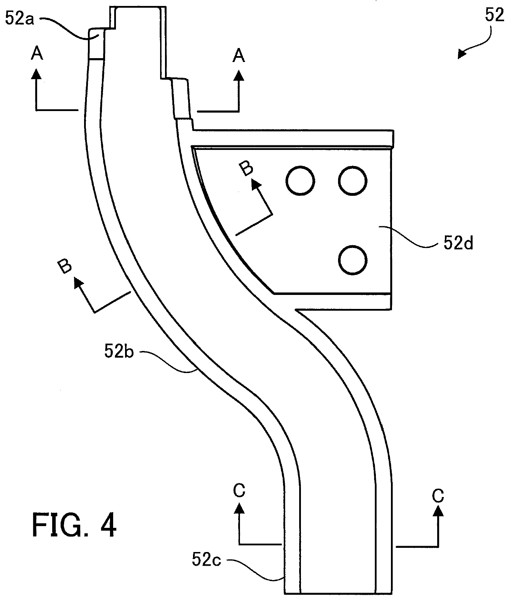

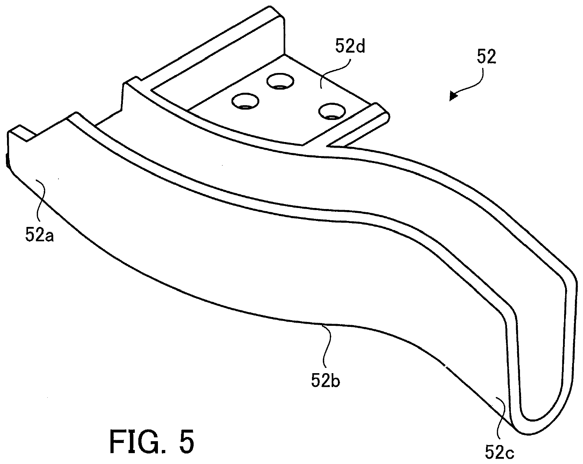

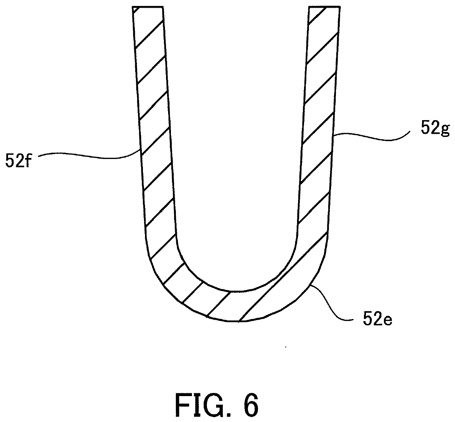

FIG. 4 is a plan view illustrating a configuration example of the coin deceleration part on the transport path. FIG. 5 is a perspective view illustrating the configuration example of the coin deceleration part on the transport path. FIG. 6 is a vertical sectional view illustrating an installation state of the coin deceleration part on the transport path.

As illustrated in FIGS. 4 and 5, the coin deceleration part 52 includes a coin reception straight part 52a, an S-shaped bent part 52b, and a coin discharge straight part 52c, which form the groove-shaped path, and a horizontal fixing part 52d, all of which are integrally formed by resin, for example. As seen from the side view in FIG. 3, the coin reception straight part 52a, the S-shaped bent part 52b, and the coin discharge straight part 52c of the coin deceleration part 52 are installed with a slope down toward the front side of the apparatus with respect to the horizontal plane. Since the horizontal fixing part 52d is fixed to a horizontal part (not illustrated) of the body of the apparatus, the coin reception straight part 52a, the S-shaped bent part 52b, and the coin discharge straight part 52c of the coin deceleration part 52 maintain their sloping state.

The coin reception straight part 52a is placed on an extension line of the long side of the discharged coin catcher part 51 and receives the coins 41b to 43b delivered from the discharged coin catcher part 51 without changing the direction of the coins 41b to 43b.

The bent part 52b changes the direction of the coins 41b to 43b rolling straight to the bent part 52b from the coin reception straight part 52a twice as the coins 41b to 43b come into contact with the inner walls of the path. The coins 41b to 43b are then delivered from the coin discharge straight part 52c to the coin dropping part 53. The frictional force caused as the coins 41b to 43b come into contact with the inner walls of the path reduces the speed of the coins 41b to 43b.

This coin deceleration part 52 has the same vertical cross section from the coin reception straight part 52a to the coin discharge straight part 52c. Namely, as illustrated in FIGS. 4 and 6, the cross section of the coin reception straight part 52a taken along A-A, the cross section of the bent part 52b taken along B-B, and the cross section of the coin discharge straight part 52c taken along C-C have the same cross sectional shape as illustrated in FIG. 6. With this shape, a bottom part 52e of the path through the coin reception straight part 52a, the bent part 52b, and the coin discharge straight part 52c is formed in a U-shape, and side walls 52f and 52g extending upward from both sides of the bottom part 52e are formed to have a wider distance therebetween at the upper edges thereof.

Instead of being formed in parallel to each other, the side walls 52f and 52g are formed to have a wider distance therebetween at the upper edges thereof. Thus, the coins 41b to 43b roll while maintaining contact with two points, the U-shaped bottom part 52e and the side wall 52f or 52g. Namely, even when a plurality of coins 41b to 43b closely attached side by side are simultaneously roll down, surfaces of the outer coins do not come into contact with the side walls 52f and 52g, and thus the coin deceleration part 52 is not clogged with coins easily, compared with a case where the side walls 52f and 52g are formed in parallel to each other.

In addition, of the configuration of having the same shape in vertical cross section across the coin deceleration part 52 installed with a slope especially prevents the bent part 52b from being clogged with coins. Namely, since the coin reception straight part 52a and the coin discharge straight part 52c of the coin deceleration part 52 are sloped in the travelling direction of the coins 41b to 43b in the same way as the discharged coin catcher part 51, the coin deceleration part 52 maintains the shape of the vertical cross section illustrated in FIG. 6, irrespective of the sloping angle. In contrast, if the bent part 52b had the shape of the vertical cross section illustrated in FIG. 6 in a horizontal position, when the coin deceleration part 52 is installed with a slope, the vertical cross section of the bend part 52b illustrated in FIG. 6 would be sloped toward the front side of the apparatus. In this case, the coins 41b to 43b passing through the bent part 52b would fall down on the side wall sloping downward. Thus, a plurality of coins 41b to 43b rolling down together would be piled up at the bent part 52b, causing the coin deceleration part 52 to be clogged with the coins. On the other hand, since the coin deceleration part 52 in a sloped state is formed to have the vertical cross section in FIG. 6 including the bent part 52b, the coin deceleration part 52 could hardly be clogged with coins.

In the above embodiment, the coin processing apparatus 1 applied to discharge of three kinds of coins has been described in detail. However, for example, when the coin processing apparatus 1 is applied to discharge of six kinds of coins, three kinds of coin storage and discharge parts may be installed on each side of a discharged coin catcher part 51.

In addition, even when a long transport path is used in a coin processing apparatus in which the coin reception device and the coin dispensing device are integrated and which performs recycling, the embodiment is also applicable to this coin processing apparatus.

The above description simply indicates the principle of the embodiment, and many variations or modifications may be made by those skilled in the art. Namely, the embodiment is not limited to the exact configuration and application examples that have been indicated or described above. All the corresponding variations and equivalents shall be deemed to fall within the scope of the embodiment according to the attached claims and the equivalents thereof.

### Reference Signs List

1 coin processing apparatus
2 coin cup
2a side wall
2b projected part
2c returned-coin opening part
2d discharged-coin opening part
3 coin reception device
4 coin dispensing device
5 transport path
41, 42, 43 coin storage and discharge part
41a, 42a, 43a hopper
41b, 42b, 43b coin
41c, 42c, 43c coin outlet port
51 discharged coin catcher part
52 coin deceleration part
52a coin reception straight part
52b bent part
52c coin discharge straight part
52d horizontal fixing part
52e bottom part
52f, 52g side wall
53 coin dropping part
100 coin processing apparatus
101 coin reception device
102 coin dispensing device
103 coin cup

## Claims

1. A coin processing apparatus comprising:
a coin cup that is placed at a lower position in front of the coin processing apparatus and that receives a discharged coin;
a coin reception device that is adjacent to the coin cup and that is placed in the coin processing apparatus;
a coin dispensing device that is placed behind the coin reception device and that discharges a previously stored coin; and
a transport path that is placed between the coin dispensing device and the coin cup and that carries a coin discharged from the coin dispensing device to the coin cup,
wherein the transport path includes:
a discharged coin catcher part that is placed on a side part of the coin dispensing device in such a way that the discharged coin catcher part slopes down toward a front side of the coin processing apparatus immediately under a coin outlet port from which the coin dispensing device discharges the coin,
a coin deceleration part that slows down a rolling speed of the coin delivered from the discharged coin catcher part, and
a coin dropping part that delivers the coin that has passed through the coin deceleration part to the coin cup.

2. The coin processing apparatus according to claim 1, wherein the coin deceleration part includes a coin reception straight part that receives a coin travelling straight from the discharged coin catcher part, a bent part that is bent in S-shape in plan view and changes a direction of the coin travelling straight to the bent part, and a coin discharge straight part that delivers the coin that has passed through the bent part to the coin dropping part.

3. The coin processing apparatus according to claim 2, wherein, when installed, the bent part has a vertical cross section having a U-shaped bottom part that rolls a coin and side walls that extend upward from both sides of the bottom part to have a wider distance therebetween at upper edges thereof.

4. The coin processing apparatus according to claim 2, wherein, when installed, the coin deceleration part has a same vertical cross section from the coin reception straight part to the coin discharge straight part.
